# EUROPEAN PATENT SPECIFICATION

(11) **EP 3 687 941 B1**
(45) Date of publication and mention of the grant of the patent: **06.09.2023**
(21) Application number: 18769406.2
(22) Date of filing: 21.09.2018
(51) Int. Cl.: C01B 3/34, C21B 5/06, C10K 3/00, C10K 3/06

(54) **METHOD FOR PRODUCING HOT SYNTHESIS GAS, IN PARTICULAR FOR USE IN BLAST FURNACE OPERATION**
VERFAHREN ZUR ERZEUGUNG VON HEISSEM SYNTHESEGAS, INSBESONDERE ZUR VERWENDUNG IM HOCHOFENBETRIEB
MÉTHODE DE PRODUCTION DE GAZ DE SYNTHÈSE CHAUD, EN PARTICULIER DESTINÉ À ÊTRE UTILISÉ DANS LE FONCTIONNEMENT D'UN HAUT-FOURNEAU

(30) Priority: 25.09.2017 LU 100453
(43) Date of publication of application: 05.08.2020
(73) Proprietor: Paul Wurth S.A., 1122 Luxembourg (LU)
(72) Inventor: KINZEL, Klaus Peter, 5222 Sandweiler (LU); BERMES, Philipp, 54294 Trier (DE); AGRAWAL, Anand Kumar, 2611 Luxembourg (LU)
(74) Representative: Office Freylinger
(86) International application number: PCT/EP2018/075683
(87) International publication number: WO 2019/057930

(56) References cited:
- WO-A1-2010/049536
- BE-A- 809 209
- GB-A- 1 247 417
- JP-A- 2001 240 906
- US-A- 4 005 986
- US-A1- 2013 344 450
- US-A1- 2016 319 381

## Description

### Technical Field

The invention relates to a method for producing hot synthesis gas, in particular for use as reducing gas in a blast furnace. The invention further relates to a method for operating a blast furnace using said hot synthesis gas as reducing gas.

### Background Art

Blast furnaces are widely used in metallurgical industry and it has always been a concern to find way of making blast furnace operation more efficient.

One of the concerns of a blast furnace installation is the blast furnace gas exiting the blast furnace. While, in the early days, this blast furnace gas may have been allowed to simply escape into the atmosphere, this has long been considered a waste of resources and an undue burden on the environment. Indeed, the blast furnace gas comprises some characteristics that may be useful elsewhere. The gas cleaning installation helps to remove unwanted and/or harmful components from the blast furnace gas, before the latter is used elsewhere (e.g. power generation). One harmful component in the blast furnace gas is CO₂. Indeed, the blast furnace gas exiting the blast furnace typically comprises a concentration of CO₂ as high as 20 to 30%.

For many years, attempts have been made to reduce CO₂ emissions from blast furnaces so as to contribute to the general worldwide reduction of CO₂ emissions.

Mainly in order to reduce the amount of coke used, a suggestion was made to recover the blast furnace gas from the blast furnace and to inject it back into the blast furnace to aid the reduction process. Devices have been proposed for separating the recovered blast furnace gas into a CO₂ rich gas for use or storage elsewhere and a CO₂ poor gas for injection back into the blast furnace so as to allow the reduction of coke.

Blast furnace gas can be reformed by reducing its CO₂ content, e.g. by a method wherein fossil fuel is added to the blast furnace gas to partially convert carbon dioxide and steam to form carbon monoxide and hydrogen, as suggested in US 3,884,677. The gas mixture forms a synthesis gas that can be used as reduction gas in the blast furnace. This process requires the blast furnace gas to be heated to a very high temperature, i.e. in the region of 1800 to 2000°C in order to react with the fossil fuel and break down carbon dioxide. Partial burning of the blast furnace gas is necessary to achieve the required temperature.

A nowadays more generally accepted method for reducing the CO₂ content in the blast furnace gas is by Pressure Swing Adsorption (PSA) or Vacuum Pressure Swing Adsorption (VPSA), as e.g. shown in US 6,478,841. PSA/VPSA installations produce a first stream of gas which is rich in CO and H₂ and a second stream of gas rich in CO₂ and H₂O. The first stream of gas can be used as reduction gas and injected back into the blast furnace. The second stream of gas can be removed from the installation and, after extraction of the remaining calorific value, disposed of. This disposal controversially consists in pumping the CO₂ rich gas into pockets underground for storage. Furthermore, although PSA/VPSA installations allow a considerable reduction of CO₂ content in the blast furnace gas from about 35% to about 5%, they are very expensive to acquire, to maintain and to operate and they need a lot of space.

Methods for producing synthesis gas integrated in metallurgical plants are known from GB 1 247 417 A, US 4 005 986 A, BE 809 209 A and US 2016/319381.

### Technical Problem

It is thus an object of the present invention to provide an improved method for producing hot synthesis gas. This object is solved by a method according to claim 1.

It is a further object of the present invention to provide an improved method for operating a blast furnace. This object is solved by a method according to claim 9.

### General Description of the Invention

The invention provides a method for producing a hot synthesis according to claim 1.

The gas mixture may be pre-heated before the step of heating and reforming.

The fuel gas and/or the industrial gas may be compressed before and/or after the step of mixing, thereby producing a compressed synthesis gas.

The reforming process may be dry reforming with the industrial gas being a CO₂ containing gas; and/or the reforming process may be steam reforming with the industrial gas being a H₂O containing gas.

By subjecting the gas mixture of industrial gas and fuel gas to such a reforming process at a temperature above 700°C and below 1700°C, the CO₂ content of the industrial gas may react with the hydrocarbon in the fuel gas, e.g. according to the following reaction: CO₂ + CH₄ → 2 H₂ + 2 CO. Also, the H₂O content of the industrial gas may react with the hydrocarbon in the fuel gas, e.g. according to the following reaction: H₂O + CH₄ → 3 H₂ + CO. Thus, the environmentally harmful and industrially worthless CO₂ can be transformed into an industrially useful CO.

By producing such synthesis gas, and feeding it into a blast furnace as reducing gas, an overall reduction of CO₂ emissions from the blast furnace operation can be expected to be between 10-30%. In addition to this, the use of such synthesis gas in a blast furnace may lead to an equivalent coke rate saving in the blast furnace of about 50 to 200 kg/ton of hot metal.

It should be noted that the mixing of the fuel gas and the industrial gas is carried out upstream of the heat accumulator.

The gas mixture is preferably heated to a temperature above 800°C, more preferably between 900°C and 1600°C, in order to perform the reforming process.

Advantageously, the reforming process is performed under elevated pressure. Such pressure is generally according to blast furnace pressure requirements and preferably ranges from 2 to 7 Bars. According to one embodiment, the fuel gas and the industrial gas are pressurized individually and are mixed afterwards. According to another embodiment, the fuel gas and the industrial gas are mixed under normal pressure and the gas mixture is pressurized afterwards.

The reforming process is preferably carried out non-catalytically. Indeed, at high temperatures, the reforming process does not necessarily require a catalyst for the reaction to take place. It is however not excluded to provide a catalyst anyway to speed up the process. Such a catalyst may e.g. be in the form of catalytic refractory arranged in the heat accumulator.

Advantageously, the fuel gas further comprises biogas and/or natural gas. The industrial gas may comprise blast furnace gas, steam and/or basic oxygen furnace gas.

In the method of the invention the heat accumulator is heated with at least one internal steel plant gas. This internal steel plant gas, i.e. any type of gas produced in the steel making process, preferably comprises blast furnace gas, basic oxygen furnace gas and/or biomass pyrolysis gas.

The present invention also concerns a method for operating a blast according to claim 9.

Preferably, the synthesis gas is fed into the blast furnace in replacement of at least some hot blast air, coke and/or auxiliary fuel (e.g. coal or natural gas). Thus, the amount of hot blast, coke and/or auxiliary fuel to be produced can be reduced. If both hot blast and synthesis gas are being fed into the blast furnace, this may for example be achieved by blowing the respective gas into the blast furnace through alternate tuyeres.

Before feeding the synthesis gas into the blast furnace, the synthesis gas may be heated through plasma energy. This can result in a further reduction of the coke rate due to the high temperature of the synthesis gas and a much lower oxygen requirement in order to maintain the raceway adiabatic flame temperature (RAFT). Since renewable energy can be used to create the plasma, this can lead to a further CO₂ reduction.

Preferably, the hot synthesis gas is fed into the blast furnace at tuyere level of the blast furnace and/or at a location within the lower shaft of the blast furnace.

A first portion of the blast furnace gas may be fed into a mixing chamber for mixing with the fuel gas and forming the gas mixture to produce synthesis gas.

A second portion of the blast furnace gas may be fed into the burner of the heat accumulator to heat up the heat accumulator. The residual heat of the blast furnace gas may be transferred to the checker bricks in the heat accumulator for subsequent transferal to the gas mixture.

A third portion of the blast furnace gas may be fed into the burner of a hot blast heat accumulator for heating up cold blast air and generating hot blast air. The residual heat of the blast furnace gas may be transferred to the checker bricks in the hot blast heat accumulator for subsequent transferal to cold blast. A portion of the blast furnace gas is thus still available for the traditional production of hot blast.

According to an embodiment of the invention, one heat accumulator may be used alternately for producing synthesis gas and for generating hot blast air. During the production of synthesis gas, carbon particles may be deposited in the heat accumulator. During the subsequent production of hot blast in the same heat accumulator, these carbon particles may be burned off, thus leading to a regeneration of the heat accumulator. In a first cycle, blast furnace gas is fed to the burner of the heat accumulator to heat up its heat retaining bricks. In a second cycle, the gas mixture formed by blast furnace gas and coke oven gas is fed through the heat accumulator to produce synthesis gas. In a third cycle, blast furnace gas is again fed to the burner of the heat accumulator to heat up its heat retaining bricks. In a fourth cycle, cold blast is fed through the heat accumulator to produce hot blast, while burning off carbon particles trapped in the heat accumulator.

According to a preferred embodiment, synthesis gas produced in one heat accumulator may be fed to more than one blast furnace. In steel plants with more than one blast furnace, the synthesis gas produced in one heat accumulator may be fed to various blast furnaces.

### Brief Description of the Drawings

Preferred embodiments of the invention will now be described, by way of example, with reference to the accompanying drawing, in which:

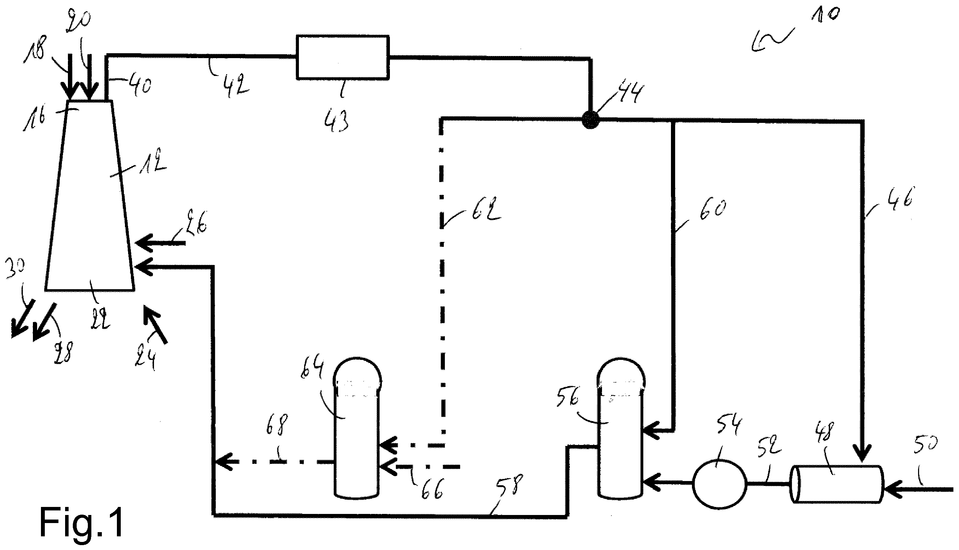

- Fig.1: is a schematic view of a blast furnace installation suitable to carry out the method for operating a blast furnace according to the present invention.

### Description of Preferred Embodiments

Fig.1 generally shows a blast furnace installation 10 comprising a blast furnace 12. The top end 16 of the blast furnace 12 generally receives a charge of coke 18 and a charge of ore 20, while the bottom end 22 of the blast furnace 12 generally receives fuel 24 and oxygen 26. At the bottom end 22, pig iron 28 and slag 30 are extracted from the blast furnace 12. The operation of the blast furnace itself is well known and will not be further described herein.

The blast furnace installation 10 further comprises gas recovery tubes 40 for recovering blast furnace gas from the blast furnace 12. The recovered blast furnace gas is fed to gas recovery piping 42 comprising a distribution valve 44. The blast furnace installation 10 may comprise a gas cleaning plant 43 arranged between the gas recovery tubes 40 and the distribution valve 44 for cleaning the gas recovered from the blast furnace 12, mostly for removing particulate matter from the gas.

At the distribution valve 44, at least a portion of the recovered blast furnace gas is directed through a first feed pipe 46 to a mixing chamber 48 receiving recovered blast furnace gas. The mixing chamber 48 is provided with a second feed pipe 50 for feeding coke oven gas into the mixing chamber 48. Within the mixing chamber 48, the blast furnace gas and the coke oven gas are mixed together to form a gas mixture. This gas mixture is then fed through a third feed pipe 52, which may comprise a compressor or blower 54, into a heat accumulator 56, here represented by a blast furnace stove (Cowper). In the heat accumulator 56, the gas mixture is heated to a high temperature, thereby subjecting the gas mixture to a dry reforming process. Dry reforming is referred to as an environment friendly process since it utilizes two major greenhouse gasses, namely CH₄ of the coke oven gas and CO₂ of the blast furnace gas, to produce valuable synthesis gas according to the following reaction: CO₂ + CH₄ → 2 H₂ + 2 CO. The dry reforming process is carried out at high temperature of at least 800°C within the heat accumulator 56 without the need of a catalyst. In general, the temperature can be above 700°C and below 1700°C and may advantageously be between 900 and 1600°C. While a catalyst may indeed not be needed, it is nevertheless not excluded to use a catalyst. The heat accumulator 56 may e.g. be provided with catalytic refractory.

The produced synthesis gas is then fed via a fourth feed pipe 58 as reducing gas back into the blast furnace 12, either at tuyere level or at lower shaft level.

The dry reforming process allows a CO₂ reduction of about 10-30%. Apart from CO₂ savings, the method also leads to coke and injection coal savings in the blast furnace. Indeed, a preliminary estimation shows an equivalent coke rate saving of about 40 to 200 kg/ton of hot metal.

At the distribution valve 44, at least a portion of the recovered blast furnace gas may be directed through a fifth feed pipe 60 to the burner of the heat accumulator 56 to heat up the latter, before transmitting that heat to the gas mixture.

At the distribution valve 44, at least a portion of the recovered blast furnace gas may be directed through a sixth feed pipe 62 to a hot blast heat accumulator 64 to heat up the latter, before transmitting that heat to a cold blast 66 (or oxygen enriched cold blast). In the traditional, hot blast heat accumulator 64, cold blast 66 is heated up to form hot blast 68, which is fed into the blast furnace 12 generally at tuyere level.

The heat accumulator 56 is heated with at least one internal steel plant gas. Such internal steel plant gas preferably comprises blast furnace gas, basic oxygen furnace gas and/or biomass pyrolysis gas.

Due to the synthesis gas, which is injected as reducing gas into the blast furnace 12, the amount of hot blast 68 fed into the blast furnace 12 can be reduced. In fact, the hot blast 68 may be largely replaced by synthesis gas. If both hot blast and synthesis gas are being fed into the blast furnace, this may e.g. be achieved by blowing the respective gas into the blast furnace through alternate tuyeres (not shown). Although not shown in detail in Fig.1, the synthesis gas may advantageously be fed into the blast furnace 12 at a hearth tuyere level of the blast furnace 12 and/or at a location of the blast furnace 12 above a melting zone. Optionally, before feeding the synthesis gas into the blast furnace 12, the synthesis gas can be heated through plasma energy.

While Fig.1 shows a blast furnace installation 10 with heat accumulator 56 dedicated to producing synthesis gas and a hot blast heat accumulator 64 dedicated to producing hot blast, it may also be envisaged to alternately use a heat accumulator for both. Indeed, during the production of synthesis gas, carbon particles may be deposited in the heat accumulator. During the subsequent production of hot blast in the same heat accumulator, these carbon particles may be burned off, thus leading to a regeneration of the heat accumulator. In a first cycle, blast furnace gas is fed to the burner of the heat accumulator to heat up its heat retaining bricks. In a second cycle, the gas mixture formed by blast furnace gas and coke oven gas is fed through the heat accumulator to produce synthesis gas. In a third cycle, blast furnace gas is again fed to the burner of the heat accumulator to heat up its heat retaining bricks. In a fourth cycle, cold blast is fed through the heat accumulator to produce hot blast.

Traditionally, a blast furnace installation comprises several heat accumulators, generally three, to continuously produce hot blast. Generally, each blast furnace comprises its dedicated heat accumulators. Due to the production of synthesis gas, the amount of hot blast can be significantly reduced. Therefore, in steel plants with more than one blast furnace, the heat accumulators of one blast furnace may be used for producing synthesis gas, while the heat accumulators of another blast furnace may be used for producing hot blast. Synthesis gas and hot blast can then be fed to both blast furnaces without having to provide additional heat accumulators.

Although not shown in Fig.1, a portion of the produced synthesis gas may be fed to a separate plant, such as e.g. a chemical plant. Indeed, excess synthesis gas may be used for the production of chemicals.

### Legend of Reference Numbers:

| | | | |
|---|---|---|---|
| 10 | blast furnace installation | 46 | first feed pipe |
| 12 | blast furnace | 48 | mixing chamber |
| 16 | top end | 50 | second feed pipe |
| 18 | charge of coke | 52 | third feed pipe |
| 20 | charge of ore | 54 | compressor or blower |
| 22 | bottom end | 56 | heat accumulator |
| 24 | fuel | 58 | fourth feed pipe |
| 26 | oxygen | 60 | fifth feed pipe |
| 28 | pig iron | 62 | sixth feed pipe |
| 30 | slag | 64 | hot blast heat accumulator |
| 40 | gas recovery tubes | 66 | cold blast |
| 42 | gas recovery piping | 68 | hot blast |
| 43 | gas cleaning plant | | |
| 44 | distribution valve | | |

## Claims

1. Method for producing a hot synthesis gas, in particular for use as reducing gas in a blast furnace, said method comprising:
- providing a fuel gas, said fuel gas being a hydrocarbon containing gas comprising coke oven gas;
- providing an industrial gas, said industrial gas being a CO₂ and/or H₂O containing gas;
- before heating, mixing said fuel gas and said industrial gas to form a gas mixture;
- carrying out heating and reforming of said gas mixture within a same heat accumulator to produce a hot synthesis gas at a temperature above 700°C and below 1700°C, wherein the heat accumulator is heated with at least one internal steel plant gas comprising blast furnace gas.

2. Method according to claim 1, wherein said gas mixture is pre-heated before the step of heating and reforming.

3. Method according to claim 1 or 2, wherein said fuel gas and/or said industrial gas is compressed before and/or after the step of mixing.

4. Method for producing a synthesis gas according to any of claims 1 to 3, wherein said heat accumulator is a blast furnace stove or a pebble heater.

5. Method for producing a synthesis gas according to any of claims 1 to 4,
- wherein said industrial gas is a CO₂ containing gas and said reforming process is dry reforming; and/or
- wherein said industrial gas is a H₂O containing gas and said reforming process is steam reforming.

6. Method for producing a synthesis gas according to any of claims 1 to 5, wherein said reforming process is carried out non-catalytically.

7. Method for producing a synthesis gas according to any of claims 1 to 6, wherein said fuel gas further comprises biogas and/or natural gas; and/or wherein said industrial gas comprises blast furnace gas, steam and/or basic oxygen furnace gas.

8. Method for producing a synthesis gas according to any of claims 1 to 7, wherein the heat accumulator is heated with at least one internal steel plant gas, which preferably further comprises basic oxygen furnace gas and/or biomass pyrolysis gas.

9. Method for operating a blast furnace, said method comprising:
- producing a hot synthesis gas according to the method of any of claims 1 to 8; this method comprising
∘ providing a fuel gas, said fuel gas being a hydrocarbon containing gas comprising coke oven gas;
∘ providing an industrial gas, said industrial gas being a CO₂ and/or H₂O containing gas;
∘ before heating, mixing said fuel gas and said industrial gas to form a gas mixture;
∘ carrying out heating and reforming of said gas mixture within a same heat accumulator to produce a hot synthesis gas at a temperature above 700°C and below 1700°C, wherein the heat accumulator is heated with at least one internal steel plant gas comprising blast furnace gas; and
- feeding said hot synthesis gas as reducing gas into said blast furnace.

10. Method for operating a blast furnace according to claim 9, wherein said hot synthesis gas is fed into said blast furnace in replacement of at least some hot blast air, coke and/or auxiliary fuel.

11. Method for operating a blast furnace according to claim 9 or 10, wherein said industrial gas is blast furnace gas.

12. Method for operating a blast furnace according to claim 11, wherein a portion of said blast furnace gas is fed into a mixing chamber for mixing with said fuel gas and forming said gas mixture; and/or wherein a portion of said blast furnace gas is fed into a hot blast heat accumulator for heating up cold blast air and generating hot blast air.

13. Method for operating a blast furnace according to any of claims 9 to 12, wherein said accumulator is used alternately for producing synthesis gas and for generating hot blast air.

14. Method for operating a blast furnace according to any of claims 9 to 3, wherein before feeding the synthesis gas into the blast furnace, the synthesis gas is heated through plasma energy.

15. Method of operating a blast furnace according to any of claims 9 to 14, wherein said hot synthesis gas is fed into the blast furnace at a hearth tuyere level of the blast furnace and/or at a location of the blast furnace above a melting zone.

## Patentansprüche

1. Verfahren zur Erzeugung eines heißen Synthesegases, insbesondere zur Verwendung als Reduktionsgas in einem Hochofen, wobei das Verfahren Folgendes umfasst:
- Bereitstellen eines Brenngases, wobei das Brenngas ein kohlenwasserstoffhaltiges Gas ist, das Koksofengas umfasst;
- Bereitstellen eines Industriegases, wobei das Industriegas ein CO₂- und/oder H₂O-haltiges Gas ist;
- vor dem Erwärmen, Mischen des Brenngases und des Industriegases, um ein Gasgemisch zu bilden;
- Durchführen einer Erwärmung und Reformierung des Gasgemischs in einem selben Wärmespeicher, um ein heißes Synthesegas bei einer Temperatur über 700 °C und unter 1700 °C zu erzeugen, wobei der Wärmespeicher mit mindestens einem internen Stahlwerksgas, das Gichtgas umfasst, erwärmt wird.

2. Verfahren nach Anspruch 1, wobei das Gasgemisch vor dem Schritt zur Erwärmung und Reformierung vorerwärmt wird.

3. Verfahren nach Anspruch 1 oder 2, wobei das Brenngas und/oder das Industriegas vor und/oder nach dem Schritt zum Mischen verdichtet wird.

4. Verfahren zur Erzeugung eines Synthesegases nach irgendeinem der Ansprüche 1 bis 3, wobei der Wärmespeicher ein Winderhitzer oder ein Pebble-Heater ist.

5. Verfahren zur Erzeugung eines Synthesegases nach irgendeinem der Ansprüche 1 bis 4,
- wobei das Industriegas ein CO₂-haltiges Gas ist und der Reformierungsprozess eine Trockenreformierung ist; und/oder
- wobei das Industriegas ein H₂O-haltiges Gas ist und der Reformierungsprozess eine Dampfreformierung ist.

6. Verfahren zur Erzeugung eines Synthesegases nach irgendeinem der Ansprüche 1 bis 5, wobei der Reformierungsprozess nicht-katalytisch durchgeführt wird.

7. Verfahren zur Erzeugung eines Synthesegases nach irgendeinem der Ansprüche 1 bis 6, wobei das Brenngas ferner Biogas und/oder Erdgas umfasst; und/oder wobei das Industriegas Gichtgas, Dampf und/oder Sauerstoffaufblaskonvertergas umfasst.

8. Verfahren zur Erzeugung eines Synthesegases nach irgendeinem der Ansprüche 1 bis 7, wobei der Wärmespeicher mit mindestens einem internen Stahlwerksgas, welches vorzugsweise ferner Sauerstoffaufblaskonvertergas und/oder Biomasse-Pyrolysegas umfasst, erwärmt wird.

9. Verfahren zum Betrieb eines Hochofens, wobei das Verfahren Folgendes umfasst:
- Erzeugen eines heißen Synthesegases gemäß dem Verfahren nach irgendeinem der Ansprüche 1 bis 8; wobei dieses Verfahren Folgendes umfasst:
∘ Bereitstellen eines Brenngases, wobei das Brenngas ein kohlenwasserstoffhaltiges Gas ist, das Koksofengas umfasst;
∘ Bereitstellen eines Industriegases, wobei das Industriegas ein CO₂- und/oder H₂O-haltiges Gas ist;
∘ vor dem Erwärmen, Mischen des Brenngases und des Industriegases, um ein Gasgemisch zu bilden;
∘ Durchführen einer Erwärmung und Reformierung des Gasgemischs in einem selben Wärmespeicher, um ein heißes Synthesegas bei einer Temperatur über 700 °C und unter 1700 °C zu erzeugen, wobei der Wärmespeicher mit mindestens einem internen Stahlwerksgas, das Gichtgas umfasst, erwärmt wird; und
- Leiten des heißen Synthesegases als Reduktionsgas in den Hochofen.

10. Verfahren zum Betrieb eines Hochofens nach Anspruch 9, wobei das heiße Synthesegas als Ersatz für zumindest einen Teil von Heißwind, Koks und/oder Zusatzbrennstoff in den Hochofen geleitet wird.

11. Verfahren zum Betrieb eines Hochofens nach Anspruch 9 oder 10, wobei das Industriegas Gichtgas ist.

12. Verfahren zum Betrieb eines Hochofens nach Anspruch 11, wobei ein Teil des Gichtgases in eine Mischkammer zum Mischen mit dem Brenngas und Bilden des Gasgemischs geleitet wird; und/oder wobei ein Teil des Gichtgases in einen Heißwind-Wärmespeicher zum Aufheizen von Kaltwind und Erzeugen von Heißwind geleitet wird.

13. Verfahren zum Betrieb eines Hochofens nach irgendeinem der Ansprüche 9 bis 12, wobei der Speicher abwechselnd zur Erzeugung von Synthesegas und zur Erzeugung von Heißwind verwendet wird.

14. Verfahren zum Betrieb eines Hochofens nach irgendeinem der Ansprüche 9 bis 13, wobei vor dem Leiten des Synthesegases in den Hochofen das Synthesegas durch Plasmaenergie erwärmt wird.

15. Verfahren zum Betrieb eines Hochofens nach irgendeinem der Ansprüche 9 bis 14, wobei das heiße Synthesegas an einer Herd-Winddüsen-Ebene des Hochofens und/oder an einer Stelle des Hochofens über einer Schmelzzone in den Hochofen geleitet wird.

## Revendications

1. Procédé de production d'un gaz de synthèse chaud, notamment pour une utilisation comme gaz réducteur dans un haut fourneau, ledit procédé comprenant :
- la fourniture d'un gaz combustible, ledit gaz combustible étant un gaz contenant des hydrocarbures comprenant du gaz de cokerie ;
- la fourniture d'un gaz industriel, ledit gaz industriel étant un gaz contenant du CO₂ et/ou de l'H₂O ;
- avant chauffage, le mélange dudit gaz combustible et dudit gaz industriel pour former un mélange gazeux ;
- la réalisation d'un chauffage et d'un reformage dudit mélange gazeux dans un même accumulateur de chaleur pour produire un gaz de synthèse chaud à une température supérieure à 700 °C et inférieure à 1 700 °C, dans lequel l'accumulateur de chaleur est chauffé avec au moins un gaz interne d'aciérie comprenant un gaz de haut fourneau.

2. Procédé selon la revendication 1, dans lequel ledit mélange gazeux est préchauffé avant l'étape de chauffage et de reformage.

3. Procédé selon la revendication 1 ou 2, dans lequel ledit gaz combustible et/ou ledit gaz industriel est comprimé avant et/ou après l'étape de mélange.

4. Procédé de production d'un gaz de synthèse selon l'une quelconque des revendications 1 à 3, dans lequel ledit accumulateur de chaleur est un Cowper ou un réchauffeur à galets.

5. Procédé de production d'un gaz de synthèse selon l'une quelconque des revendications 1 à 4,
- dans lequel ledit gaz industriel est un gaz contenant du CO₂ et ledit procédé de reformage est un reformage à sec ; et/ou
- dans lequel ledit gaz industriel est un gaz contenant de l'H₂O et ledit procédé de reformage est un reformage à la vapeur.

6. Procédé de production d'un gaz de synthèse selon l'une quelconque des revendications 1 à 5, dans lequel ledit procédé de reformage est réalisé de manière non catalytique.

7. Procédé de production d'un gaz de synthèse selon l'une quelconque des revendications 1 à 6, dans lequel ledit gaz combustible comprend en outre du biogaz et/ou du gaz naturel ; et/ou dans lequel ledit gaz industriel comprend du gaz de haut fourneau, de la vapeur et/ou du gaz de convertisseur basique à oxygène.

8. Procédé de production d'un gaz de synthèse selon l'une quelconque des revendications 1 à 7, dans lequel l'accumulateur de chaleur est chauffé avec au moins un gaz interne d'aciérie, qui comprend en outre, de préférence, un gaz de convertisseur basique à oxygène et/ou un gaz de pyrolyse de biomasse.

9. Procédé de fonctionnement d'un haut fourneau, ledit procédé comprenant :
- la production d'un gaz de synthèse chaud selon le procédé de l'une quelconque des revendications 1 à 8 ; ce procédé comprenant
o la fourniture d'un gaz combustible, ledit gaz combustible étant un gaz contenant des hydrocarbures comprenant du gaz de four à coke ;
o la fourniture d'un gaz industriel, ledit gaz industriel étant un gaz contenant du CO₂ et/ou de l'H₂O ;
o avant chauffage, le mélange dudit gaz combustible et dudit gaz industriel pour former un mélange gazeux ;
o la réalisation d'un chauffage et d'un reformage dudit mélange gazeux dans un même accumulateur de chaleur pour produire un gaz de synthèse chaud à une température supérieure à 700 °C et inférieure à 1 700°C, dans lequel l'accumulateur de chaleur est chauffé avec au moins un gaz interne d'aciérie comprenant un gaz de haut-fourneau ; et
- l'alimentation dudit gaz de synthèse chaud comme gaz réducteur dans ledit haut fourneau.

10. Procédé de fonctionnement d'un haut fourneau selon la revendication 9, dans lequel ledit gaz de synthèse chaud est introduit dans ledit haut fourneau en remplacement d'au moins un peu de vent chaud, de coke et/ou de combustible auxiliaire.

11. Procédé de fonctionnement d'un haut fourneau selon la revendication 9 ou 10, dans lequel ledit gaz industriel est du gaz de haut fourneau.

12. Procédé de fonctionnement d'un haut fourneau selon la revendication 11, dans lequel une partie dudit gaz de haut fourneau est introduite dans une chambre de mélange pour se mélanger avec ledit gaz combustible et former ledit mélange gazeux ; et/ou dans lequel une partie dudit gaz de haut fourneau est introduite dans un accumulateur de chaleur à vent chaud pour chauffer du vent froid et générer du vent chaud.

13. Procédé de fonctionnement d'un haut-fourneau selon l'une quelconque des revendications 9 à 12, dans lequel ledit accumulateur est utilisé en alternance pour la production de gaz de synthèse et pour la génération de vent chaud.

14. Procédé de fonctionnement d'un haut fourneau selon l'une quelconque des revendications 9 à 13, dans lequel avant d'introduire le gaz de synthèse dans le haut fourneau, le gaz de synthèse est chauffé par énergie plasma.

15. Procédé de fonctionnement d'un haut fourneau selon l'une quelconque des revendications 9 à 14, dans lequel ledit gaz de synthèse chaud est introduit dans le haut fourneau au niveau d'une tuyère de creuset du haut fourneau et/ou à un endroit du haut fourneau au-dessus d'une zone de fusion.
